## Europäisches Patentamt
## European Patent Office
## Office européen des brevets

(19)

(11) Numéro de publication: **0 121 452**
**B1**

(12) **FASCICULE DE BREVET EUROPEEN**

(45) Date de publication du fascicule du brevet:
**13.05.87**

(51) Int. Cl.⁴: **B 60 N 1/06**

(21) Numéro de dépôt: **84400380.6**

(22) Date de dépôt: **24.02.84**

(54) **Articulation du dossier d'un siège pour véhicules divers.**

(30) Priorité: **01.03.83 FR 8303318**
**24.06.83 FR 8310464**

(43) Date de publication de la demande:
**10.10.84 Bulletin 84/41**

(45) Mention de la délivrance du brevet:
**13.05.87 Bulletin 87/20**

(84) Etats contractants désignés:
**AT BE CH DE GB IT LI LU NL SE**

(56) Documents cités:
**DE - A - 2 931 873**
**FR - A - 2 277 550**
**FR - A - 2 331 305**
**FR - A - 2 377 175**
**FR - A - 2 490 942**

(73) Titulaire: **TUBAUTO Société dite:, 6, rue Paul-Vaillant Couturier, F-92307 Levallois-Perret (FR)**

(72) Inventeur: **Janiaud, André Maurice Charles, 82 rue Lauriston, F-75116 Paris (FR)**

(74) Mandataire: **Madeuf, Claude Alexandre Jean et al, CABINET MADEUF 3, avenue Bugeaud, F-75116 Paris (FR)**

## Description

On connaît déjà depuis longtemps des sièges de véhicules utilisés couramment soit dans les avions, soit dans les trains, soit dans les véhicules automobiles, qui comportent un dossier dont l'inclinaison peut être réglable par rapport à l'assise. On a déjà proposé pour le réglage du dossier par rapport à l'assise beaucoup de mécanismes discontinus plus ou moins compliqués, mais tous présentent l'inconvénient qu'au bout d'un certain laps de temps, du fait de la conception et de l'utilisation de l'articulation ainsi qu'également des trépidations inhérentes au véhicule, il se produit des jeux aussi bien dans la denture des organes de blocage du dossier par rapport à l'assise que dans l'axe de rotation placé entre l'assise et le dossier puisque l'axe de rotation ne porte que sur un point du palier. De ce fait, d'une part, la sécurité n'est pas bien assurée et, d'autre part, le dossier n'est pas rigidement fixé et donne ainsi une impression désagréable à l'utilisateur du siège.

La présente invention remédie à ces inconvénients en créant une articulation du dossier d'un siège présentant, d'une part, sur l'organe de verrouillage du dossier par rapport à l'assise, un moyen sûr de rattrapage des jeux et, d'autre part, sur l'axe d'articulation du dossier par rapport à l'assise, une construction d'axe rattrapant les jeux pouvant se produire en ce point.

Il est d'abord rappelé que chaque siège présente, à sa partie inférieure arrière, deux articulations identiques qui sont commandées par un seul levier placé tantôt à gauche tantôt à droite du siège suivant l'espace laissé libre et suivant le type du véhicule dans lequel le siège est monté. En effet, si pour les véhicules automobiles, les sièges avant comportent, en général, une commande pour chaque siège placée à gauche pour le siège de gauche, à droite pour le siège de droite, il n'est pas de même pour les sièges d'avion et de wagons de chemins de fer, car en ce qui les concerne la commande peut être placée près de l'accoudoir ou sur l'accoudoir séparant deux sièges contigus et, dès lors, la commande peut être à gauche et/ou à droite suivant la disposition et le pas adopté pour la disposition des sièges.

Le brevet DE-A-2931873 se rapporte à une articulation du dossier d'un siège pour véhicules divers dans laquelle une ferrure fixe solidaire de l'assise comporte une commande agissant sur un organe excentré qui provoque lors de sa rotation soit le blocage soit le déblocage d'un grain denté repoussé sur la denture d'une ferrure solidaire du dossier du siège.

Conformément à une réalisation de l'invention, l'articulation est caractérisée en ce que ce grain denté se bloque latéralement par réaction, empêchant ainsi tout déplacement latéral, même si les dentures coopérantes comportent un certain jeu et en ce que l'axe de rotation du dossier par rapport à l'assise est conformé de façon que l'axe solidaire en général de la ferrure fixe, c'est-à-dire de l'assise, prend appui en deux points distincts sur le palier ovalisé de la ferrure solidaire du dossier en assurant ainsi un blocage angulaire certain du dossier par rapport à l'assise.

Suivant une autre caractéristique de l'invention, le grain denté est constitué par deux éléments séparés l'un de l'autre par une ligne de coupe présentant une inclinaison telle que la force exercée de bas en haut par l'organe excentré donne une résultante latérale bloquant le grain contre l'une des glissières servant au guidage du grain coulissant.

Une autre réalisation de l'invention est donnée par l'objet des revendications 6 et suivantes.

Diverses autres caractéristiques de l'invention ressortent d'ailleurs de la description détaillée qui suit.

Des formes de réalisation de l'invention sont représentées, à titre d'exemples non limitatifs, aux dessins annexés.

La fig. 1 est une élévation latérale d'une première forme de réalisation de l'articulation placée entre l'armature fixe de l'assise et l'armature mobile du dossier.

La fig. 2 est une élévation latérale montrant une légère variante de réalisation de l'articulation du dossier.

La fig. 3 est une coupe schématique montrant l'axe de rotation de l'articulation prenant appui en deux points symétriques sur le palier en assurant ainsi un positionnement certain du dossier par rapport à l'assise.

La fig. 4 montre une variante de réalisation de l'axe de rotation du dossier par rapport à l'assise.

La fig. 5 est une élévation latérale schématique d'une autre variante de réalisation de l'articulation du dossier.

La fig. 6 est une élévation latérale d'une articulation conforme à l'invention en position de blocage.

La fig. 7 est une élévation latérale de l'articulation en position débloquée.

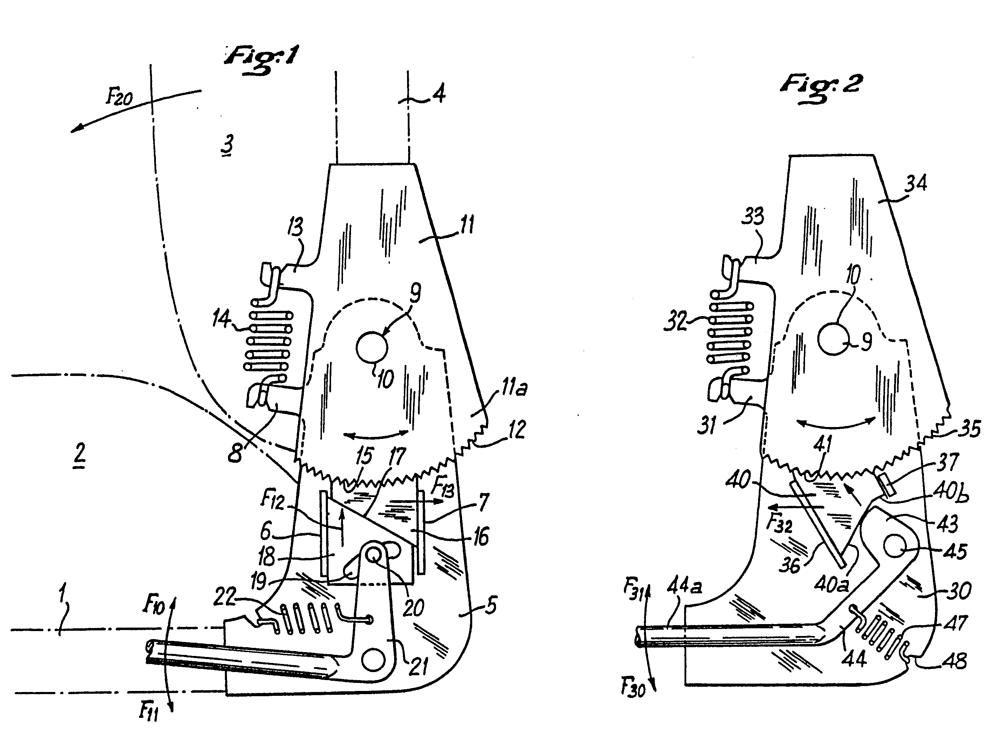

A la fig. 1, on a représenté schématiquement l'armature 1 d'une assise 2 d'un siège de véhicule. Comme cela est courant, l'armature 1 est réalisée par des tubes convenablement conformés sur lesquels repose une nappe élastique supportant, d'une part, un rembourrage formant coussin et, d'autre part, un revêtement constituant la surface extérieure de l'assise.

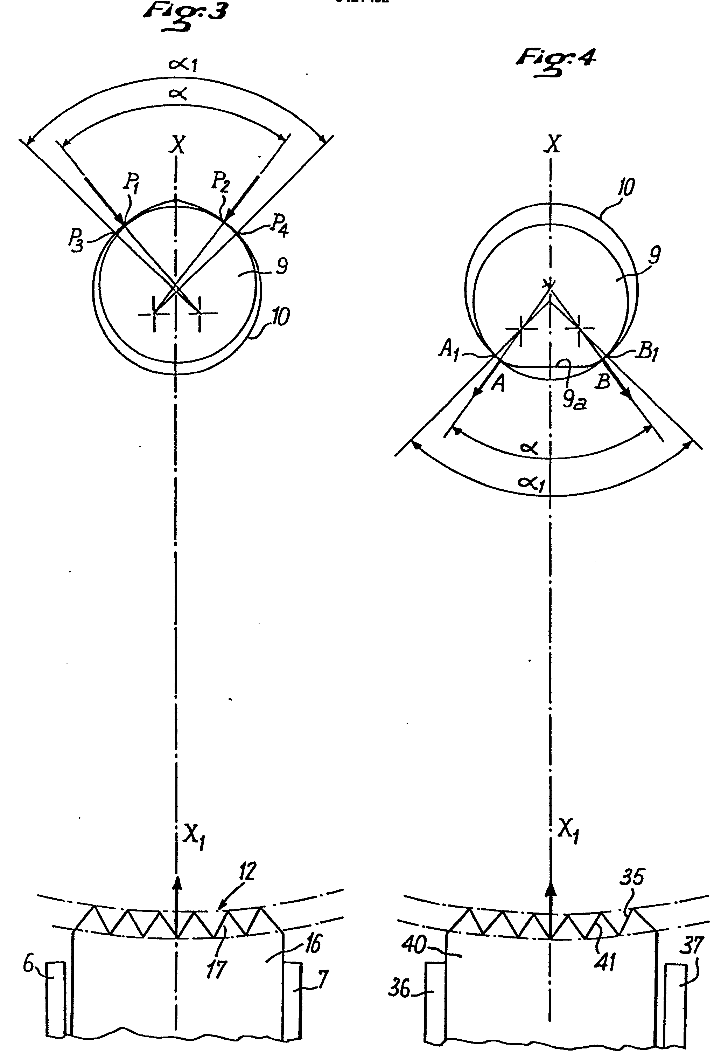

Le dossier 3 comporte également une armature 4 réalisée elle aussi le plus souvent en tube puis une nappe élastique porte un coussin revêtu d'un tissu. La partie arrière de l'armature 1 de l'assise 2 comporte, dans le cas présent, une ferrure 5 en équerre dont la partie plate est solidaire de l'armature 1 et qui présente dans sa zone verticale deux glissières 6, 7 parallèles, une patte d'accrochage 8 et, à sa partie supérieure, un axe 9 (voir également fig. 3) sur lequel est monté le palier 10 de la ferrure 11 fixée à l'extrémité de la ferrure 4 du dossier 3. La ferrure 11 qui affecte sensiblement la forme d'un trapèze dont la base 11a est dentée en 12 porte également une patte d'accrochage 13 sur laquelle est monté un ressort 14 fixé entre cette patte 13 et la patte 8 de la ferrure 5. La denture 12, comme cela est visible à la fig. 1, est courbe et coopère avec la denture 15 portée par l'extrémité supérieure d'un grain 16 dont la face inférieure 17 est coupée suivant un certain angle pour coopérer avec une dent 18 dont la face supérieure est coupée suivant le même angle que la face inférieure 17 du grain denté 16. Le grain denté 16 ainsi que la dent 18 sont placés entre les glissières 6, 7 et, de plus, la dent 18 percée d'une fenêtre courbe 19 coopère avec un ergot 20 monté à l'extrémité d'un levier 21 soumis à l'action d'un ressport 22 accroché à une extrémité, d'une part, sur la partie verticale du levier 21 et, d'autre part, sur la ferrure 5 à son autre extrémité. Ainsi, et comme cela est représenté à la fig. 1, le levier 21 tend à pivoter sous l'action du ressort 22 dans le sens de la flèche F11, en repoussant, par l'intermédiaire de l'ergot 20 et de la fenêtre courbe 19, la dent 18 dans le sens de la flèche F12, c'est-à-dire vers le haut, ce qui provoque ainsi l'élévation du grain denté. Mais, du fait des plans inclinés 17, 19 le grain 16 est repoussé dans le sens de la flèche F13 contre une glissière 7 en provoquant ainsi un blocage sûr et sans jeu des deux dentures 12 et 15 l'une par rapport à l'autre donnant ainsi une position certaine de la ferrure 11 par rapport à la ferrure 5. Le dossier 3 est ainsi correctement verrouillé par rapport à l'assise 2 mais, de plus, du fait que l'axe cylindrique 9 repose (voir fig. 3) dans le palier 10 il prend appui en deux points P1, P2 dans le palier 10, ces deux points étant symétriques par rapport à l'axe vertical X, $X_1$ de l'articulation du siège. En effet, le palier 10 a une forme sensiblement ovoïde comme le montre le dessin. Même en admettant qu'à la suite du fonctionnement et des trépidations un certain jeu se produise et déforme l'axe 9, celui-ci prend toujours appui dans le palier 10 entre les points P1, P2 (angle $\alpha$) et les points P3, P4 (angle $\alpha1$) (voir fig. 3) ce qui assure, en liaison avec le blocage du grain 16, un maintien ferme et constant du dossier 3 par rapport à l'assise 2 puisque le ressort 14 tend à ramener en permanence, dans le sens de la flèche F20 (voir fig. 1), le dossier contre le dos de la personne assise sur le siège.

On obtient ainsi, aussi bien par le grain coulissant 16 dont la constitution particulière provoque le blocage des dentures 12, 15 l'une par rapport à l'autre que par l'appui de l'axe 9 en deux points symétriques P1, P2 du palier 10, le jeu nécessaire au bon fonctionnement de l'articulation du dossier par rapport à l'assise mais, en même temps, un confort inégalé évitant les bruits et vibrations gênants pour l'utilisateur du siège. On peut ainsi obtenir un confort parfait même en prévoyant des tolérances de fabrication supérieures à celles existant actuellement, ce qui permet l'emploi de moyens de fabrication plus simples et donc l'obtention d'articulations de dossier de siège à un prix inférieur au prix des articulations existantes. Le déblocage de l'articulation de la fig. 1 est provoqué en faisant pivoter le levier 21 dans le sens de la flèche F10 contre l'action du ressort 22.

A la fig. 2, on a représenté simplement une ferrure inférieure 30 qui est solidaire de l'assise et dont la forme est identique à celle décrite précédemment. La patte d'accrochage 31 sert de support au ressort 32 fixé sur la patte d'accrochage 33 de la ferrure supérieure 34 solidaire de l'armature du dossier. Le ressort 32 tend donc à ramener en permanence le dossier du siège contre le dos de l'utilisateur. La ferrure 34, qui a la même forme que la ferrure 11 précédente et qui comporte une denture courbe inférieure 35, présente sensiblement en son centre un palier 10 dans lequel pénètre l'axe 9 de la ferrure 30. Cette dernière comporte, sous la ferrure 34, deux glissières inclinées 36, 37 parallèles entre lesquelles est logé un grain coulissant 40 comportant à sa partie supérieure une denture 41. Le grain coulissant 40 est taillé à sa partie inférieure de façon à présenter une double pente inclinée 40a, 40b présentant la forme d'un V renversé à large ouverture. La pente inclinée 40a repose en permanence contre une came 43 fixe à l'extrémité d'un levier 44 qui est articulé sur un axe 45 solidaire de la ferrure 30. La partie avant 44a du levier 44 porte l'organe de manœuvre non représenté et ce levier est rappelé dans le sens de la flèche F30 (voir fig. 2) par un ressort 47 fixé par l'une de ses extrémités sur le levier 44 et par son autre extrémité par un cran 48 prévu dans la ferrure 30.

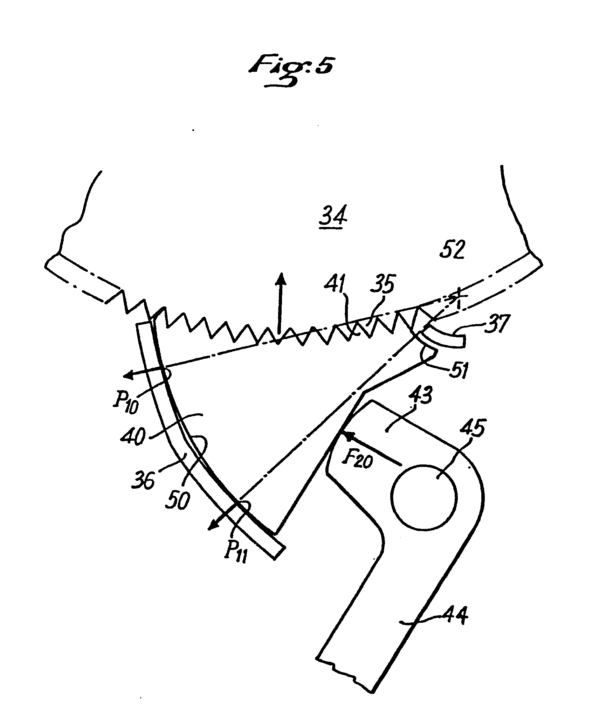

En soulevant le levier 44 dans le sens de la flèche F31, on fait pivoter autour de l'axe 45 la came 43 qui, de ce fait, dégage le grain 40 qui peut coulisser le long de la glissière 36 en arrière et ainsi la denture 35, qui est dégagée de la ferrure 34, peut pivoter dans un sens ou dans l'autre sens suivant le réglage désiré du dossier du siège. En lâchant le levier 44 le ressort 47 rappelle celui-ci dans le sens de la flèche F30 et la came 43 permet le blocage de la denture 41 du grain 40 dans la denture 35 de la ferrure 34. Du fait de la pente inclinée 40a du grain, celui-ci par réaction vient s'appliquer fortement sur la glissière 36 dans le sens de la flèche F32 (résultant de la force d'application du ressort 37 sur la came 43) et ainsi se produit une application très importante de l'axe 9 (voir fig. 4) au point A et au point B sur le palier 10 solidaire de la ferrure 34. Comme il est montré à la fig. 4, l'axe 9 comporte un méplat horizontal 9a permettant l'application des points A et B de l'axe sur le palier 10 en formant un angle $\alpha$. Comme dans le cas précédent, les points A et B sont symétriques par rapport à l'axe vertical X, $X_1$ de l'articulation et, même en admettant qu'un jeu de produise, les points A et B sont décalés vrs l'extérieur en $A_1$ et $B_1$ comme le montre l'angle $\alpha1$ de la fig. 4.

On obtient ainsi, comme dans le cas précédent, un verrouillage correct sans jeu du dossier par rapport à l'assise du siège.

A la fig. 5, on a représenté schématiquement la ferrure 34 solidaire du dossier et comportant à sa partie inférieure la denture 35 qui coopère avec le grain 40 muni à sa partie supérieure de la denture 41. Cependant, dans ce cas, le grain 40 présente des bords longitudinaux 50, 51 ayant une forme corbure, sensiblement parallèles, puisque partant d'un même centre théorique 52. Dans ce cas, les glissières 36, 37 sont également sensiblement courbes de façon à guider le grain coulissant 40 lors de ses mouvements vers le haut et vers le bas, suivant que l'on désire verrouiller ou déverrouiller la denture 41 du grain 40 de la denture 35 de la ferrure 34.

Comme cela a été expliqué dans le cas précédents, la came 43 en agissant dans le sens de la flèche F20 provoque, lors de la remontée du grain (voir fig. 2), c'est-à-dire au moment du blocage, une application de ce grain le long de la glissière 36 en deux points $P_{10}$, $P_{11}$ du fait de la résultante provoquée par le force F20.

Cette dernière réalisation permet un angle d'attaque moyen et extrême de la denture 41 du grain 40 sur la denture 36 de la ferrure 34 plus faible qu'avec un grain à coulissement rectiligne. On a donc plus de liberté de conception et on peut utiliser une denture à angle plus fermé, ce qui est favorable sur le plan mécanique.

Bien entendu, l'articulation de la ferrure 34 sur la ferrure fixe peut également être réalisée, soit à l'aide d'un palier ovalisé (voir fig. 3) et dans ce cas l'axe est sensiblement cylindrique ou, au contraire, avec un palier cylindrique et alors l'axe comporte un méplat (voir fig. 4). De plus, et bien que l'on préfère que l'axe de rotation à méplat ou le palier ovalisé soit solidaire de la ferrure fixe, il est possible également de réaliser le contraire, c'est-à-dire que ces deux organes se trouvent solidaires de la ferrure mobile permettant l'articulation du dossier.

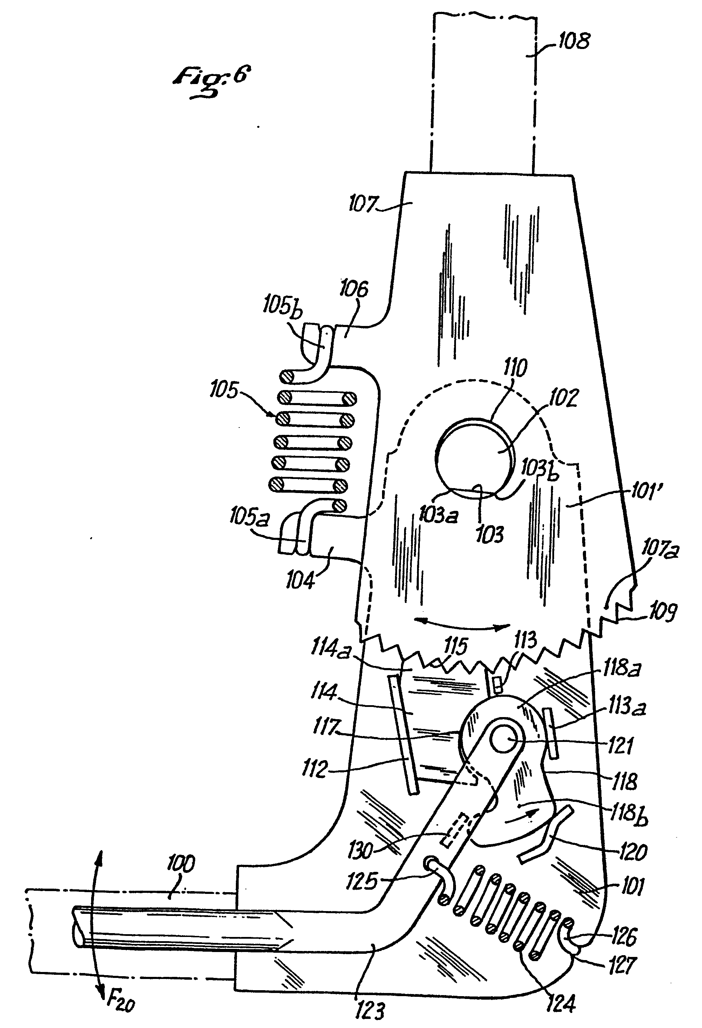

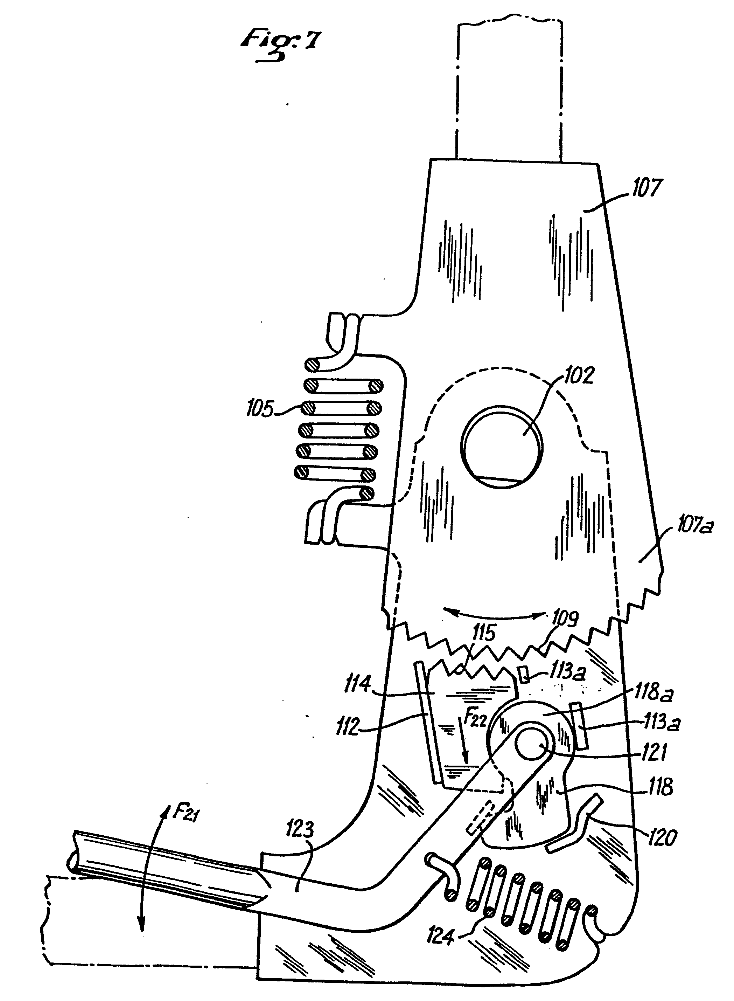

Les fig. 6 et 7 montrent une autre forme de réalisation de la commande de deux grains mobiles faisant partie des deux articulations d'un siège afin d'assurer la stabilité du dossier par rapport à l'assise dans tous les cas, même lorsque l'ensemble des pièces a pris du jeu.

A la fig. 6, on a représenté en traits mixtes une partie 100 de l'armature de l'assise qui porte la ferrure fixe 101 dont la partie supérieure 101' montre un axe 102 qui présente, à sa partie inférieure, un méplat 103. La flasque 101 porte à sa partie avant une patte 104 sur laquelle est accrochée l'extrémité 105a du ressort 105 dont l'autre extrémité 105b est fixée sur une patte 106 solidaire de l'avant du flasque mobile 107 solidaire de l'armature 108 du dossier.

La flasque mobile 107, qui porte à sa partie inférieure 107a une denture courbe 109, est enfilé sur l'axe 102 du fait d'un alésage 110 d'un diamètre supérieur au diamètre de cet axe 102. Ainsi, le dossier peut librement pivoter par l'intermédiaire de l'alésage 110 autour de l'axe 102.

Bien entendu, la fig. 6 représentant la partie gauche du siège; il existe la même construction sur la partie droite du siège.

La ferrure inférieure fixe 101 porte des guides 112–113 sensiblement parallèles et entre lesquels peut coulisser un grain mobile 114 présentant, à sa partie supérieure 114a, une denture 115 destinée à coopérer avec la denture courbe 109 de la ferrure mobile 107. Le grain 114 présente à sa partie inférieure un découpe arrondie 117 prévue sous le guide 113 et dans laquelle pénètre le pourtour supérieur évasé 118a d'une came 118 dont la partie inférieure 118b affecte la forme d'un pied dont la face inférieure coopère avec une contrecame de verrouillage 120 solidaire du flasque fixe 101.

La came 118 est montée sur un arbre de liaison 121 traversant le flasque fixe 101 dont la partie libre extérieure porte un levier de commande 123 qui tend à être rappelé en position de repos par un ressort 124 fixé par son extrémité 125 sur le levier 123 et par son extrémité 126 dans une encoche 127 prévue à la partie basse arrière du flasque fixe 101.

Finalement, une deuxième contre-came 130 est prévue sur la flasque fixe 101 devant le pied de came 118b pour limiter la courbe de ce dernier.

Comme le montre la fig. 6, lorsque le dossier est verrouillé dans une position quelconque sur l'assise du siège, la denture 115 du grain 114 pénètre dans la denture courbe 109 du flasque mobile 107 sous l'action de la came 118 dont la partie 118b prend appui contre la came 120 en repoussant ainsi le grain 114 contre la glissière 112 assurant ainsi un blocage parfait du dossier par rapport à l'assise puisqu'en supplément et du fait du méplat 103, l'alésage 110 du flasque mobile 107 prend appui en deux points 103a–103b de l'axe 102. Le ressort 124 en rappelant vers le bas le levier 123, dans le sens de la flèche F20 (fig. 6) provoque un deuxième verrouillage impératif du grain 114 par la partie supérieure 118a de la came 118 qui est en butée permanente contre la glissière 113a disposée parallèlement à la glissière 112.

Lorsque l'on désire modifier la position du dossier, le levier 123 est relevé dans le sens de la flèche F21 (fig. 7) contre l'action du ressort 124, ce mouvement entraînant le rotation de l'arbre de liaison 121 et donc le pivotement de la tête 118a de la came 118 qui provoque l'abaissement dans le sens de la flèche F22 du grain 114 du fait de la coopération de la partie supérieure évasée 118a de la came 118 avec la découpe arrondie 117 arrière du grain 114.

De ce fait la denture 115 du grain 114 dégage obligatoirement la denture courbe 109 prévu à la partie inférieure 107a du flasque mobile 107.

Les guides 114, 113, 113a assurent un guidage parfait de deux pièces mobiles au cours de leur mouvement entraînant le pied 118b de la came 118 venant en contact avec, d'une part, la contre-came 130 et, d'autre part, la partie inférieure de la contre-came 120 (voir fig. 7). Les dentures étant dégagées l'une et l'autre, il est alors possible de régler à volonté la position du dossier du siège qui tend à revenir sur le dos de l'utilisateur du fait du rappel provoqué par la tension du ressort 105. Dans la position choisie du dossier et en relâchant le levier 123 qui est rappelé par le ressort 124, la came 118 et le grain 114 reprennent également leur position première, c'est-à-dire celle montrée à la fig. 6 dans laquelle la coopération du grain mobile 114 avec l'axe 102 à méplat 103 et l'alésage 110 permet un blocage parfait du dossier par rapport à l'assise, même si après une usure des dentures 109 et 115 et du pourtour extérieur 118a de la came 118 il pourrait se produire des jeux nuisibles à la bonne position du dossier par rapport à l'assise. On obtient ainsi un blocage en trois points (points 103a, 103b et portée du grain coulissant 114 sur le guide 112) assurant une parfaite stabilité du dossier.

**Revendications**

1. Articulation du dossier d'un siège pour véhicules divers dans laquelle une ferrure fixe (5, 101) solidaire de l'assise (2, 100) comporte une commande (21, 123), agissant sur un organe excentré (20, 118) qui provoque lors de sa rotation soit le blocage soit le déblocage d'un grain denté (16, 116) repoussé sur la denture (12, 109) d'une ferrure (11, 107) solidaire du dossier du siège, caractérisée en ce que ce grain denté se bloque latéralement par réaction, empêchant ainsi tout déplacement latéral, même si les dentures (12, 15) coopérantes comportent un certain jeu et en ce que l'axe de rotation (9) du dossier par rapport à l'assise est conformé de façon que l'axe (9) solidaire en général de la ferrure fixe (5), c'est-à-dire de l'assise, prend appui en deux points distincts (P1, P2) sur le palier (10) ovalisé de la ferrure (11) solidaire du dossier en assurant ainsi un blocage angulaire certain du dossier par rapport à l'assise.

2. Articulation suivant la revendication 1, caractérisée en ce que le grain denté est constitué par deux éléments (16, 18) séparés l'un de l'autre par une ligne de coupe (17) présentant une inclinaison telle que la force (F12) exercée de bas en haut par l'organe excentré (20) donne une résultante latérale (F13) bloquant le grain (16) contre l'une des glissières (6, 7) servant au guidage du grain coulissant (16, 18).

3. Articulation suivant la revendication 1, caractérisée en ce que le grain coulissant (40) denté à sa partie supérieure (41) comporte à sa partie inférieure un taillage à double pente inclinée (40a, 40b) présentant la forme d'un V renversé à large ouverture pour coopérer, par sa pente (40a) avec une came (43) solidaire d'un levier (44) de façon à ce qu'à la suite de la poussée latérale de la came (43) sur le grain (40) il est créé une force résultante qui applique l'un des côtés du grain (40) sur l'une des glissières inclinées (36, 37) guidant ce grain en direction de la denture (35) de la ferrure (34) solidaire du dossier du siège.

4. Articulation suivant les revendications 1, 2 et 3, caractérisée en ce que l'axe d'articulation (9) entre la ferrure fixe (30) et la ferrure mobile (34), présente un méplat inférieur (9a) assurant le contact en deux points A, B et de cet axe sur le palier circulaire (10) solidaire de la ferrure mobile (34).

5. Articulation suivant l'une des revendications 1, 3 et 4, caractérisée en ce que le grain (40) comporte des côtés longitudinaux (50, 51) sensiblement courbes et parallèles de façon à coopérer avec des glissières (36, 37) également de forme sensiblement courbe assurant ainsi un blocage du grain (40) lorsque le dossier est rendu solidaire de l'assise en deux points P$_{10}$, P$_{11}$ le long de la glissière courbe la plus longue (36) en complétant ainsi le rattrapage des jeux.

6. Articulation du dossier d'un siège pour véhicules divers suivant la préambule de la revendication 1, caractérisé en ce que la ferrure fixe (101) solidaire de l'assise (100) comporte à sa partie supérieure un axe (102) à méplat (103) permettant la rotation par un alésage (110), de plus grand diamètre que l'axe (102), de la ferrure (107) solidaire du dossier (108) et, de plus, la partie inférieure de la ferrure supérieure (107) présente une denture courbe inférieure (109) coopérant avec la denture (115) d'un grain (114) coulissant entre deux guides (112, 113) fixés sur la ferrure (101), ce grain (114) comportant à sa partie arrière inférieure une partie arrondie (117) soumise à l'action d'une came (118) prolongée à sa partie inférieure par un pied (118b) se déplaçant entre des contre-cames (120, 130) sous l'action d'un levier de commande (123) pour réaliser le blocage des dentures coopérantes (109, 115) précitées afin de verrouiller le dossier par rapport à l'assise en coopération avec l'alésage (110) et l'axe (102) à méplat (103) de façon à réaliser un blocage en trois points du dossier par rapport à l'assise.

7. Articulation du dossier d'un siège pour véhicules divers suivant la revendication 6, caractérisée en ce que la partie active (118a) de la came (118) prend appui contre un guide-came (113a) dans sa position de verrouillage du grain coulissant (114), ce guide-came (113a) étant solidaire de la ferrure inférieure fixe (101).

8. Articulation du dossier d'un siège pour véhicules divers suivant l'une des revendications 6 et 7, caractériusée en ce que le levier de commande (123) est rappelé par un ressort (124) dans sa position de travail dans laquelle la came (118) bloque le grain coulissant (114) en assurant le verrouillage de la ferrure (107) du dossier (108).

**Patentansprüche**

1. Sitzlehnengelenk für unterschiedliche Fahrzeuge, bei welchem ein mit einem Grundelement (2, 100) fest verbundener Haltebeschlag (5, 101) ein Stellelement (21, 123) trägt, welches auf ein Exzenterorgan (20, 118) wirkt, das daher durch seine Drehung entweder eine Blockierung oder eine Freigabe eines gezahnten Zwischenstückes (16, 114) bewirkt, das gegen die Verzahnung (12, 109) eines an der Rückenlehne des Fahrzeugsitzes befestigten Beschlages (11, 107) gedrängt wird, dadurch gekennzeichnet, dass sich dieses gezahnte Zwischenstück durch Reaktion seitlich verriegelt und so eine weitere seitliche Verlagerung verhindert, selbst wenn die zusammenwirkenden Zähne (12, 15) ein bestimmtes Spiel aufweisen, und dass die Schwenkachse (9) die Rückenlehne am Grundelement so ausgebildet ist, dass die Schwenkachse (9), die in der Regel mit dem festen Beschlag (5), d. h. dem Grundelement fest verbunden ist, an zwei getrennten Punkten (P1, P2) in einem unrunden Lager (10) des mit der Rückenlehne fest verbundenen Beschlages (11) abgestützt ist, wodurch eine sichere Winkelfeststellung der Rückenlehne im Verhältnis zum Grundelement sichergestellt wird.

2. Gelenk nach Anspruch 1, dadurch gekennzeichnet, dass das gezahnte Zwischenstück durch zwei Elemente (16, 18) gebildet ist, die voneinander durch eine Schnittlinie (17) getrennt sind, welche so geneigt ist, dass die vom Exzenterorgan (20) von unten nach oben ausgeübte Kraft (F12) eine resultierende Querkraft (F13) ergibt, welche das Zwischenstück (16) gegen eine der als Gleitführung für das Zwischenstück (16, 18) dienenden Führungen (6, 7) verriegelt.

3. Gelenk nach Anspruch 1, dadurch gekennzeichnet, dass das verschiebbare und an seiner oberen Partie (41) gezahnte Zwischenstück (40) in seinem unteren Teil eine Zahnform mit zweifach geneigter Bahn (40a, 40b) in der Form eines umgekehrten V mit weiter Öffnung aufweist, und dass seine Bahn (40a) mit einem Nocken (43) zusammenwirkt, der mit einem Hebel (44) verbunden ist, derart, dass infolge eines seitlichen Drucks des Nockens (43) am Zwischenstück (40), dieses eine resultierende Kraft erfährt, welche eine Seite des Zwischenstücks (40) gegen eine der geneigten Führungen (36, 37) anlegt, welche das Zwischenstück in Richtung der Verzahnung (35) des an der Rückenlehne befestigten Beschlages (34) führen.

4. Gelenk nach den Ansprüchen 1, 2 und 3, dadurch gekennzeichnet, dass die Schwenkachse (9) zwischen dem feststehenden Beschlag (30) und dem beweglichen Beschlag (34) eine untere Abflachung (9a) aufweist, um eine Berührung dieser Schwenkachse an zwei Punkten (A, B) im kreisförmigen Lager (10) sicherzustellen, welches am beweglichen Beschlag (34) angebracht ist.

5. Gelenk nach einem der Ansprüche 1, 3 und 4, dadurch gekennzeichnet, dass das Zwischenstück (40) leicht gekrümmte parallele Seitenkanten (50, 51) aufweist, um mit den gleichermassen leicht gekrümmten Führungen (36, 37) zusammenzuwirken, und so eine Verriegelung des Zwischenstücks (40) an zwei Punkten P$_{10}$, P$_{11}$ längs der gekrümmten Führung (36) mit der grösseren Länge (36) sicherzustellen, wenn die Rückenlehne am Grundelement festgestellt wird, wodurch Spiel vollständig aufgefangen ist.

6. Gelenk an einer Rückenlehne unterschiedlicher Fahrzeugsitze nach dem Oberbegriff des Anspruchs 1, dadurch gekennzeichnet, dass der am Grundelement (100) angebrachte feststehende Beschlag (101) in seinem oberen Bereich eine Achse (102) mit einer Abflachung (103) aufweist, welche eine Drehung des an der Rückenlehne (108) angebrachten Beschlages (107) um eine Öffnung (110) mit einem grösseren Durchmesser als dem der Achse (102) ermöglicht, und dass der untere Bereich des oberen Beschlages (107) eine untere gekrümmte Verzahnung (109) aufweist, die mit der Verzahnung (115) eines Zwischenstücks (114) zusammenwirkt, welches zwischen zwei am unteren Beschlag (101) befestigten Führungen (112, 113) gleitet, welches Zwischenstück (114) unten rückwärts einen abgerundeten Bereich (117) hat, welcher der Einwirkung eines Nockens (118) unterworfen ist, von dessen Unterseite ein Fuss (118b) absteht, welcher zwischen Gegennokken (120, 130) unter dem Einfluss eines Steuerhebels (123) verschiebbar ist, um den Eingriff der zusammenwirkenden vorgenannten Verzahnungen (109, 115) herzustellen und die Rückenlehne im Verhältnis zum Grundelement zu verriegeln im Zusammenwirken mit der Öffnung (110) und der Achse (102) mit der Abflachung (103) in der Art, um eine Fixierung an drei Punkten zwischen Rükkenlehne und Grundelement herzustellen.

7. Gelenk an einer Rückenlehne unterschiedlicher Fahrzeugsitze nach Anspruch 6, dadurch gekennzeichnet, dass der aktive Teil (118a) des Nokkens (118) gegen einen Führungsnocken (113a) in der Verriegelungsposition des verschiebbaren Zwischenstücks (114) abgestützt wird, welcher Führungsnocken (113a) am feststehenden unterern Beschlag (101) angebracht ist.

8. Gelenk an einer Rückenlehne unterschiedlicher Fahrzeugsitze nach einem der Ansprüche 6 und 7, dadurch gekennzeichnet, dass der Steuerhebel (123) durch eine Feder (124) in seine Arbeitsposition zurückgezogen wird, in welcher der Nocken (118) das verschiebbare Zwischenstück (114) blockiert und die Verriegelung des Beschlages (107) der Rückenlehne (108) sicherstellt.

**Claims**

1. Articulation of the seat-back of a seat for various vehicles in which a fixed iron member (5, 101) fixedly mounted with the seat frame (2, 100) comprises a control means (21, 123) acting on an eccentric member (20, 118) causing upon its rotation either locking or unlocking of a toothed bearing plate (16, 114) pushed back on the toothing (12, 109) of an iron fitting member (11, 107) fixedly mounted with the seat frame, characterized in that this toothed bearing plate is laterally locked by reaction, thus preventing any lateral displacement, even if the cooperating toothings (12, 15) have some clearence, and in that the rotation pin (9) of the seat-back with respect to the seat frame is so shaped that the pin (9) which is generally fixed to the fixedly mounted iron fitting member (5), i.e. to the seat frame, is supported on two different points (P1, P2) on the ovalized bearing member (10) of the iron fitting member (11) fixedly mounted with the seat frame while ensuring therefore a safe angular locking of the seat-back with respect to the seat frame.

2. Articulation according to claim 1, characterized in that the toothed bearing plate is formed by two elements (16, 18) respectively separated by a cut line (17) having such an inclination that the force (F12) exerted from bottom to top by the eccentric member (20) gives a lateral resultant force (F13) locking the bearing plate (16) against one of the slide members (6, 7) used for guiding the sliding baring plate (16, 18).

3. Articulation according to claim 1, characterized in that the sliding bearing plate (40) which is toothed at its upper part (41) comprises at its lower part a double sloped cut (40a, 40b) having the shape of an inverted V with a large opening for cooperating, by its slope (40a), with a cam (43) fixedly mounted with a lever (44) in order that, following a lateral pushing of the cam (43) on the bearing plate (40), there is created a resultant force which applies one of the sides of the bearing plate (40) on one of the inclined slide members (36, 37) guiding this bearing plate in direction of the toothing (35) of the iron fitting member (34) fixedly mounted with the seat-back.

4. Articulation according to claims 1, 2 and 3, characterized in that the rotation pin (9) between the fixed iron fitting member (30) and the mobile iron fitting member (34) has a lower flat (9a) ensuring the two-point contact A, B of this pin on the circular bearing member (10) fixedly mounted with the mobile iron fitting member (34).

5. Articulation according to one of claims 1, 3 and 4, characterized in that the bearing plate (40) comprises longitudinal sides (50, 51) which are substantially arcuate and parallel in order to cooperate with slide members (36, 37) which are also substantially arcuate ensuring thereby a locking of the bearing plate (40) when the seat-back is fixedly mounted with the seat frame in two points $P_{10}$, $P_{11}$ along the longer arcuate slide member (36), completing thereby the clearance accomodation.

6. Articulation of the seat-back of a seat for various vehicles according to the preamble of claim 1, characterized in that the fixed iron fitting member (101) fixedly mounted with the seat frame (100) comprises at its upper part a pin (102) having a flat (103) enabling the rotation through a bore (110), of a greater diameter that the pin (102), of the iron fitting member (107) fixedly mounted with the seat-back (108) and, further, the lower part of the upper iron member (107) has a lower arcuate toothing (109) cooperating with the toothing (115) of a bearing plate (114) sliding between two guide means (112, 113) fixed on the iron fitting member (101), this bearing plate (114) comprising at its lower rear part an arcuate part (117) submitted ato action of a cam (118) extended at its lower part by a foot (118b) moving between counter-cams (120, 130) under action of a control lever (123) for locking the above-mentioned cooperating toothings (109, 115) in order to lock the seat-back with respect to the seat frame by cooperating with the bore (110) and the pin (102) with the flat (103) in order to make a three-point locking of the seat-back with respect to the seat frame.

7. Articulation of the seat-back of a seat for various vehicles according to claim 6, characterized in that the active part (118a) of the cam (118) bears against a cam-guide (113a) in its locking position of the sliding bearing plate (114), this camguide (113a) being fixedly mounted with the lower fixed iron fitting member (101).

8. Articulation of the seat-back of a seat for various vehicles according to one of claims 6 and 7, characterized in that the control lever (123) is returned by a spring (124) in its working position in which the cam (118) locks the sliding bearing plate (114) while ensuring the locking of the iron member (107) of the seat-back (108).

*Fig.2*

*Fig.1*

0121452

Fig. 3

Fig. 4

11

*Fig.5*

Fig. 6

0121452

15

0121452

Fig: 7

107

105

102

107a

115    109

114    113a

112    F22    118a

113a

121

118

F21    123    120

124

17